# EUROPEAN PATENT APPLICATION

(11) **EP 1 149 972 A2**
(43) Date of publication of application: **31.10.2001**
(21) Application number: 01109892.8
(22) Date of filing: 24.04.2001
(51) Int. Cl.: E05B 73/00, G02C 11/00, F16B 41/00

(54) **A device for fixing the anti-shoplifting hard tag to the stem of eyeglasses on sale**

(30) Priority: 27.04.2000 IT VI000077
(71) Applicant: Lorenplast di Lorenzi G. & C. s.n.c., 36073 Spagnago di Cornedo Vicentino (Vicenza) (IT)
(72) Inventor: Lorenzi, Gabriele, 36073 Spagnago di Cornedo Vicentino (IT)
(74) Representative: Bettello, Pietro, Dott. Ing.

(57) **Abstract**

There is disclosed a device for fixing the anti-shoplifting hard tag to the stem of eyeglasses for sale. It comprises a single-block body (1) into which there are present two housings where there is inserted a threaded dowel (3) which, once screwed, locks the above body (1) to the eyeglasses stem. The device is characterised in that the upper portion of the body (1), which defines the first of the above two housings, is closed in its upper side (14) so as to obtain a slit (9) onto the same, that forms the keyhole of a lock inside which the key that allows screwing the cap (3) is introduced.

## Description

The present finding realises a device for fixing the anti-shoplifting hard tag to the stem of eyeglasses in a safe manner and with an easy application, with the advantage of removing such hard tag by using only a custom key, according to the general part of claim 1.

Tags to be fixed to one of the stems of eyeglasses for sale in a shop have long been known. They are provided with antitheft functions since if the customer walks out of the shop with a pair of eyeglasses without detaching the hard tag, the latter causes the emission of an alarm signal, which warns the operator of the illicit fact.

Currently, in the prior art, various systems for fixing the hard tag are used, but they can all be easily opened or removed by ill-intentioned people willing to steal the eyeglasses from the shop.

By way of an example, we can mention the patent documents no. VI98U000046 (Italian utility model) where the hard tag is fixed to the eyeglasses stem through a flexible tape; no. EP-A 0943766, where the hard tag is fixed to the stem through a snap-wise system, and no. WO-A-99/36653, where the hard tag is coupled to the stem through a threaded clamp moved through an outside key.

Purpose of the present finding is that of realising a device for fixing the anti-shoplifting hard tag to the stem of eyeglasses for sale, of the threaded clamp type, which should be safer than the similar products of the known type.

More in detail, purpose of the finding is that of preventing ill-intentioned people from easily identifying the impression of the actuating key that allows screwing or unscrewing, that is, coupling and removing the clamp on the eyeglasses stem.

This is realised by providing that the contact portion between the actuating key and the threaded clamp is totally covered by a cap, so as to form a lock.

In this way, even though an ill-intentioned person can carefully examine the eyeglasses provided with hard tag and displayed to the public, it is impossible for him to define the type and configuration of the key engagement since only the slit or keyhole into which the same key is introduced can be seen from the outside.

The finding shall be better defined by the description of a possible embodiment, made by way of an illustrative and nonlimiting example, with reference to the attached drawings. In such drawings:
- Figure 1 (Table I) shows a plan view of the device of the finding applied to an eyeglasses stem;
- Figure 2 shows a perspective view of the device of the finding, applied to an eyeglasses stem;

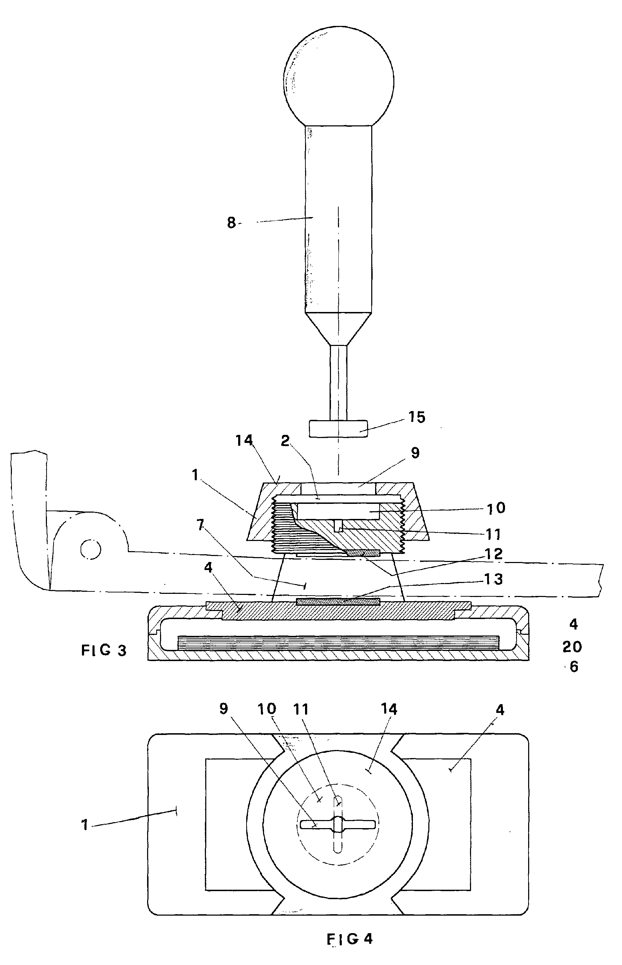

- Figures 3 and 4 (Table II) respectively show an elevation sectioned view and a plan view of the device of the finding.

As it can be seen in the figures, the device for the anti-shoplifting hard tag of the finding comprises a single-block body 1, which defines two inside housings.

The first housing 2 consists of a threaded circular housing with perpendicular axis with respect to the direction of the coupled stem of the eyeglasses, and it is intended to receive a threaded dowel 3, which is introduced through the aperture present at the base of the same body, thus remaining locked into said housing, since, afterwards said aperture is closed by a lamination 4 welded to the above body.

A second housing 7 is arranged along the longitudinal axis of the body, substantially horizontal, and it is intended to receive the eyeglasses stem, which - once introduced into said second housing, is locked by the threaded dowel 3, which is made to rotate (through screwing) with a special key 8.

The novelty feature of the finding provides that the upper portion of body 1, the one defining the first housing 2, is closed so as to obtain a slit 9 that forms the keyhole of a lock into which the key is introduced.

Once penetrated into the keyhole, said key has the possibility of freely turning on itself, since a circular recess 10 has been created on the upper portion of the threaded dowel 3, so as to allow the coupling of its engagement 15 with the corresponding underlying slit 11, obtained on the upper portion of the dowel and in any position it may be, thus allowing the operator to turn dowel 3 until the stem is totally locked into the second housing.

Advantageously, on the upper portion of the threaded dowel 3, which functions as mobile closing cap, and on the base of lamination 4, which functions as fixed counter-cap, there are obtained housings adapted to receive two pins, respectively 12 and 13, made of a rubber material, so as to allow the maximum clamping of the caps without damaging the stem surface.

The finding is completed by the introduction of the anti-shoplifting hard tag 20, consisting of a sound detector or other member adapted for the purpose, into housing 5 of body 1, which is afterwards closed by a small plate 6, which thus forms a single piece with the above body through in se known welding systems.

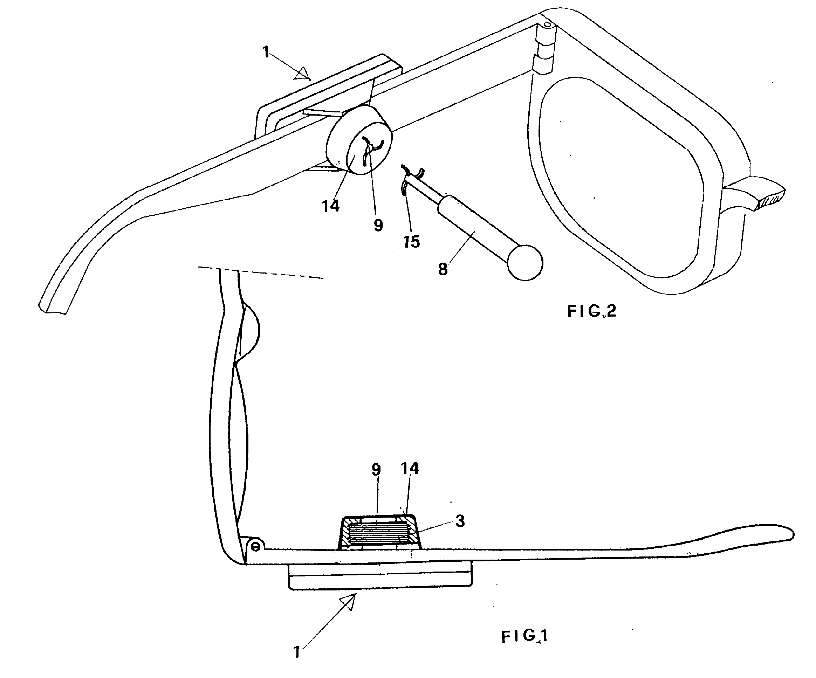

As it can be seen in figure 2, the slit or keyhole 9 obtained on the upper closed portion 14 of body 1 can have differently shaped configurations, so as to receive the engagement 15 of the special key 8; such configurations cannot be detected with precision by an ill-intentioned person.

Of course, different embodiments are possible, without departing from the scope of the claims defined hereinafter.

## Claims

1. DEVICE FOR FIXING THE ANTI-SHOPLIFTING HARD TAG TO THE STEM OF EYEGLASSES FOR SALE, of the type comprising a single-block body (1) which defines two inside housings; the first housing (2) consists of a threaded circular housing, with perpendicular axis with respect to the direction of the coupled stem of the eyeglasses, and it is intended to receive a threaded dowel (3), which is introduced through the aperture present at the base of the same body, thus remaining locked into said housing, since, afterwards, said aperture is closed by a lamination (4) welded to the above body; a second housing (7) is arranged along the longitudinal axis of the body, substantially horizontal, and it is intended to receive the eyeglasses stem, which - once introduced into said second housing, is locked by the threaded dowel (3), which is made to rotate (through screwing) with a special key (8), in said single-block body (1) there being obtained a housing (5) for receiving the anti-shoplifting hard tag (20) and closed through a small plate (6),
said device being **characterised in that**
the upper portion of the body, the one defining the first housing (2), is closed in the upper side (14) so as to obtain a slit (9) that forms the keyhole of a lock into which the key (8) is introduced.

2. DEVICE FOR FIXING THE ANTI-SHOPLIFTING HARD TAG TO THE STEM OF EYEGLASSES FOR SALE, according to claim 1, **characterised in that** once penetrated into the keyhole, the key has the possibility of freely turning on itself, since a circular recess (10) has been created on the upper portion of the threaded dowel (3), so as to allow the coupling of its engagement (15) with the corresponding underlying slit (11), obtained on the upper portion of the dowel and in any position it may be, thus allowing the operator to turn the dowel (3) until the stem is totally locked into the second housing.

3. DEVICE FOR FIXING THE ANTI-SHOPLIFTING HARD TAG TO THE STEM OF EYEGLASSES FOR SALE, according to claims 1 and 2, **characterised in that** the engagement (15) of the key (8) and the relevant keyhole (9) exhibit such a custom configuration that cannot be detected with precision by an ill-intentioned person.

4. DEVICE FOR FIXING THE ANTI-SHOPLIFTING HARD TAG TO THE STEM OF EYEGLASSES FOR SALE, according to claims 1-3, **characterised in that** on the upper portion of the threaded dowel (3), which functions as mobile closing cap, and on the base of the lamination (4), which functions as fixed counter-cap, there are obtained housings adapted to receive two pins (12, 13), made of a rubber material, so as to allow the maximum clamping of the caps without damaging the stem surface.
